# EUROPÄISCHE PATENTSCHRIFT

(11) **EP 1 899 171 B1**
(45) Veröffentlichungstag und Bekanntmachung des Hinweises auf die Patenterteilung: **25.02.2009**
(21) Anmeldenummer: 07727698.8
(22) Anmeldetag: 03.04.2007
(51) Int. Cl.: B60B 3/16, F16B 33/00, F16B 33/06, C23C 28/00

(54) **KOMBINIERTE BEFESTIGUNGSANORDNUNG MIT BESCHICHTUNG**
COMBINED FASTENING ARRANGEMENT WITH COATING
ARRANGEMENT DE FIXATION COMBINE AVEC REVETEMENT

(30) Priorität: 24.04.2006 DE 202006006741 U; 26.05.2006 DE 202006008314 U
(43) Veröffentlichungstag der Anmeldung: 19.03.2008
(73) Patentinhaber: ABC Umformtechnik GmbH & Co. KG, 58285 Gevelsberg (DE)
(72) Erfinder: HOFSCHNEIDER, Manfred, 42349 Wuppertal (DE)
(74) Vertreter: Patentanwälte Dr. Solf & Zapf
(86) Internationale Anmeldenummer: PCT/EP2007/053227
(87) Internationale Veröffentlichungsnummer: WO 2007/122079

(56) Entgegenhaltungen:
- EP-A- 1 712 659
- EP-A1- 1 207 313
- EP-B1- 0 976 795
- DE-C1- 3 432 001
- DE-U1- 29 819 782

## Beschreibung

Die Erfindung betrifft eine kombinierte Befestigungsanordnung mit einem Kopfteil zur Drehmomentaufbringung und mit einem Schaftteil, das am freien Ende einen Gewindeabschnitt aufweist, wobei an dem Kopfteil und auf dem Schaftteil eine Scheibe verdrehbar gehalten ist und wobei das Kopfteil mit einer ersten funktionellen Beschichtung und die Scheibe mit einer von der ersten funktionellen Beschichtung unterschiedenen zweiten funktionellen Beschichtung beschichtet ist,

In spezieller Ausführung kann es sich dabei um eine kombinierte Befestigungsanordnung handeln, bei der das Kopfteil aus einem Kopf zur Drehmomentaufbringung und das Schaftteil aus einem Schaft gebildet sind, die zusammen einen Schraubkörper bilden, der an seinem freien Ende den Gewindeabschnitt aufweist, wobei zwischen dem Kopf und dem Gewindeabschnitt an dem Schaft die Scheibe verdrehbar gehalten ist.

So kann in bevorzugter Weise die Befestigungsanordnung als ein kombiniertes Befestigungselement mit einem Kopf zur Drehmomentaufbringung und mit einem Schaft ausgebildet sein, der am freien Ende einen Gewindeabschnitt aufweist, wobei der Kopf und der Schaft einen Schraubkörper bilden, wobei zwischen dem Kopf und dem Gewindeabschnitt an dem Schaft eine Scheibe verdrehbar und unverlierbar gehalten ist und wobei der Kopf, der Schaft und die Scheibe mit einer Beschichtung überzogen sind.

Ähnliche Befestigungselemente, wie eingangs genannt, sind aus den deutschen Gebrauchsmustem DE 296 14 320 U1 und DE 298 19 782 U1 bekannt. Diese bekannten Befestigungselemente besitzen in einer bevorzugten Verwendung als Radschrauben den Vorteil, dass die jeweils unverlierbar auf dem Schaft gehaltene Scheibe, insbesondere, wenn sie sich in einem Anlagebereich für ein Fahrzeugrad kugel- oder kegelförmig verjüngt, eine definierte Befestigung des Fahrzeugrades an der Fahrzeugnabe gewährleistet. In der DE 298 19 782 U1 wird dabei eine besondere technische Gestaltung der Halterung der Scheibe am Schaft beschrieben, die sich in Bezug auf ihre günstige Herstellbarkeit in der Praxis bewährt hat. Ein Vorteil besteht dabei neben einer Erhöhung der Nachgiebigkeit der gesamten Verbindung durch eine vergrößerte Klemmlänge in einem gegenüber einteiligen Befestigungselementen stabileren Drehmoment-Vorspannkraft-Verhalten.

In der DE 298 19 782 U1 ist dabei auch erwähnt, dass sowohl der Schraubkörper, also der Kopf und der Schaft, als auch die Scheibe an ihrer Oberfläche mit einer korrosionsmindernden zinkhaltigen und/oder nickelhaltigen Schutzschicht, insbesondere mit einer Mehrfach-Beschichtung, überzogen sein können. Es wird auch erwähnt, dass eine derartige funktionelle Beschichtung dem Schutz gegen Beschädigungen und/oder der Minderung der Korrosion dienen sowie auch tribotechnisch und/oder farbgebend wirksam sein kann. Eine reibungsverringemde Beschichtung für Metalle ist darüber hinaus - an sich - beispielsweise auch aus der EP 0 976 795 B1 bekannt, wobei auch eine grundsätzliche Eignung dieser Beschichtung für Schraubenmuttern, Schraubenbolzen und andere Befestigungsmittel, Tür-, Hauben-, und Kofferraumverschlussteile, Schamiere, Türstopper, Fensterführungselemente, Sicherheitsgurtkomponenten, Bremsscheiben und -trommeln und andere verwandte Teile aus dem Bereich der Beförderungsindustrie postuliert wird. Aus der DE 34 32 001 C1 ist eine reibungsverringemde Beschichtung auf einem Schraubgewinde bekannt. Ein durch Beschichtung mit einer zinkhaltigen Schicht in seiner Korrosionsbeständigkeit verbessertes Befestigungselement für Radschrauben ist in der EP 1 712 659 A1 beschrieben.

In der EP 1 207 313 A1 ist eine kombinierte Befestigungsanordnung der eingangs genannten Art mit einer Mutter als Kopfteil beschrieben. Dabei wird die Möglichkeit erwähnt, dass der Mutterkörper und der Drehteller, welcher der Scheibe entspricht, unterschiedliche Oberflächenbeschichtungen erhalten können, wobei als einzige grundsätzlichen Funktion, die diese Beschichtungen erfüllen können, der Korrosionsschutz genannt ist. Eine technische Bedeutung von unterschiedlich ausgeführten Oberflächenbeschichtungen ist nicht angegeben, sondern die Unterschiedlichkeit ist ein reines Mittel der Wahl. Darüber, wie sich die bekannte Mutter bei einem Anziehen verhält, ist nichts ausgeführt. Es ist davon auszugehen, dass sich beim Aufschrauben der Mutter auf ein Bauteil der Drehteller - wie auch der Name sagt - auf dem Bauteil dreht, wodurch es auf der Oberfläche des Bauteils zu Beschädigungen kommen kann. Hiervon sind insbesondere kratzempfindliche Oberflächen betroffen.

Der Erfindung liegt die Aufgabe zu Grunde, eine kombinierte Befestigungsanordnung, insbesondere in einer Ausbildung als kombiniertes Befestigungselement, der eingangs genannten Art zu schaffen, für die das Anziehverhalten unabhängig von dem Werkstoff des Teiles ist, mit dem die Verbindung erfolgen soll. Ein solches Bauteil kann z. B. ein Rad sein, dessen Felge aus einem mit einer kathodischen Tauchlegierung beschichteten Stahl oder Aluminium besteht. Dabei soll eine langzeitlich stabile beschädigungsfreie Verbindung erzielt werden.

Die Aufgabe der Erfindung wird dadurch gelöst, dass die funktionellen Beschichtungen derartig tribotechnisch wirksame Schichten umfassen, dass bei einem unter Aufbringung eines Drehmoments erfolgenden Anziehen des Kopfteils die Scheibe gegenüber einem Bauteil, mit dem eine Verbindung erfolgen soll, keine Relativbewegung ausführt, d. h., dass sich beim Anziehen immer das Kopfteil auf der Scheibe dreht, nicht aber die Scheibe auf dem Bauteil.

Erfindungsgemäß können auf diese Weise neben der Erzielung eines Korrosionsschutzes die Eigenschaften der verschiedenen auftretenden Paarungen der Oberflächen, nämlich der Paarung von der Oberfläche des Kopfteils mit der Oberfläche der Scheibe, von der Oberfläche der Scheibe mit der Oberfläche des Bauteils, mit dem die Verbindung erfolgen soll, sowie gegebenenfalls auch von der Oberfläche des Schaftteils, insbesondere des Gewindes des Schaftteils, mit der, insbesondere in einer Einschrauböffnung liegenden, Oberfläche des Bauteils, mit dem die Verbindung erfolgen soll, in optimaler Weise aufeinander abgestimmt werden. Insbesondere kann dabei jeweils ein gewünschtes tribologisches Verhalten der genannten Paarungen eingestellt und aufeinander abgestimmt werden. So wird es vorteilhafterweise z. B. möglich, einerseits der Gefahr eines selbsttätigen Lösens der Verbindung der erfindungsgemäßen Befestigungsanordnung mit einem Bauteil, wie einem Fahrzeugrad, unter dynamischer Last entgegen zu wirken, andererseits aber beispielsweise auch zu erreichten, dass die erfindungsgemäße Befestigungsanordnung im sogenannten Missbrauchsfall, d. h. bei einem Anziehen mit besonders hohen Drehmomenten, nicht schon bei vergleichsweise relativ kleinen Anziehdrehmomenten durch Plastifizieren oder im Extremfall durch Abriss versagt.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im Folgenden die Erfindung näher erläutert werden. Dabei zeigen:
- Fig. 1: eine Schnittdarstellung einer Scheibe einer erfindungsgemäßen Befestigungsanordnung, die als erfindungsgemäßes Befestigungselement ausgebildet ist,
- Fig. 2: eine perspektivische Darstellung der in Fig. 1 gezeigten Scheibe in verkleinertem Maßstab,
- Fig. 3: eine teilgeschnittene Darstellung eines aus einem Kopf als Kopfteil und einem Schaft als Schaftteil eines erfindungsgemäßen Befestigungselementes gebildeten Schraubkörpers,
- Fig. 4: eine perspektivische Darstellung des in Fig. 3 gezeigten Schraubkörpers in verkleinertem Maßstab,
- Fig. 5: eine Darstellung der erfindungsgemäßen Befestigungsanordnung in Vorderansicht,
- Fig. 6: eine perspektivische Darstellung der in Fig. 5 gezeigten erfindungsgemäßen Befestigungsanordnung in verkleinertem Maßstab,
- Fig. 7: einen Querschnitt durch eine erste funktionelle Beschichtung einer erfindungsgemäßen Befestigungsanordnung,
- Fig. 8: einen Querschnitt durch eine zweite funktionelle Beschichtung einer erfindungsgemäßen Befestigungsanordnung,
- Fig. 9: einen Querschnitt durch eine erfindungsgemäße Befestigungsanordnung im Montagezustand.

In den verschiedenen Figuren der Zeichnung sind dieselben Teile auch mit denselben Bezugszeichen versehen, so dass sie in der Regel auch jeweils nur einmal beschrieben werden.

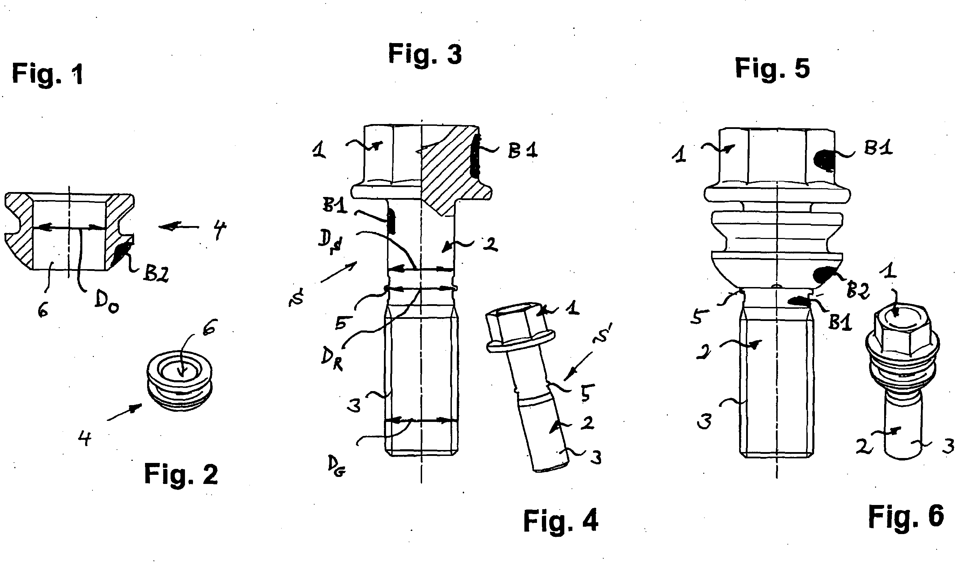

Wie die Darstellungen in Fig. 1 bis 6 zeigen, weist ein erfindungsgemäßes Befestigungselement ein als Kopf 1 ausgebildetes Kopfteil 1 zur Drehmomentaufbringung und ein als Schaft 2 ausgebildetes Schaftteil 2 auf, das wiederum an seinem freien Ende einen Gewindeabschnitt 3 aufweist. Kopf 1 und Schaft 2 bilden zusammen einen Schraubkörper S, der in Fig. 3 und 4 als Einzelteil dargestellt ist. Das Gewinde des Gewindeabschnittes 3 kann vornehmlich ein aufgewalztes Gewinde sein, wobei der Durchmesser D_{G} des Gewindeabschnittes 3 größer als der Durchmesser D_{S} des Schaftes 2 ist, wie dies Fig. 3 zeigt. Das Gewinde des Gewindeabschnittes 3 kann mit Vorteil gefertigt werden, bevor die Scheibe 4 mit dem aus Kopf 1 und Schaft 2 bestehenden Schraubkörper S verbunden wird.

Wie Fig. 5 und 6 zeigen, ist zwischen dem Kopf 1 und dem Gewindeabschnitt 3 eine Scheibe 4 verdrehbar gehalten, die in Fig. 1 und 2 als Einzelteil dargestellt ist. Die Scheibe 4 ist dabei zwischen dem Kopf 1 und dem Gewindeabschnitt 3 an einem am Schaft 2 befindlichen Rand 5 gehalten, dessen Außendurchmesser D_{R} größer ist als der Durchmesser D_{S} des Schaftes 2, wie dies ebenfalls Fig. 3 zeigt. Für die verdrehbare Halterung ist der Schraubkörper S mit seinem Schaft 2 durch eine Ringöffnung 6 in der Scheibe 4 geführt, deren Durchmesser D_{O} kleiner ist, als der Außendurchmesser D_{R} des Randes 5, jedoch größer als der Durchmesser D_{S} des Schaftes 2.

Sowohl der Schraubkörper S als auch die Scheibe 4 können beispielsweise aus einem vergüteten, d. h. z. B. einem gehärteten und angelassenen, Vergütungsstahl bestehen. Der Kopf 1, der Schaft 2 und die Scheibe 4 sind auf ihrer jeweiligen Oberfläche mit einer Beschichtung überzogen, was durch die in Fig. 1, 3 und 5 mit den Bezugszeichen B1 und B2 gekennzeichneten Oberflächenbereiche veranschaulicht wird.

Erfindungsgemäß ist nun vorgesehen, dass das Kopfteil 1, im speziellen Fall der Kopf 1, und vorzugsweise auch das Schaftteil 2, im speziellen Fall der Schaft 2, mit einer ersten funktionellen Beschichtung B1 und die Scheibe 4 mit einer von der ersten funktionellen Beschichtung B1 unterschiedenen zweiten funktionellen Beschichtung B2 überzogen sind.

Die erste Beschichtung B1 und/oder die zweite Beschichtung B2 können dabei zumindest eine korrosionsmindernde, insbesondere zinkhaltige Schutzschicht umfassen. Außerdem können die erste Beschichtung B1 und/oder die zweite Beschichtung B2 zumindest eine tribotechnisch wirksame Schicht, insbesondere eine reibungsmindemde Gleitschicht umfassen.

Hierbei ist es einerseits möglich, dass die korrosionsmindemde Schutzschicht und die tribotechnisch wirksame Schicht identisch sind, es kann aber bevorzugt auch vorgesehen sein, dass die erste Beschichtung B1 und/oder die zweite Beschichtung B2 jeweils aus einem Schichtsystem mit zwei oder mehr Einzelschichten S1, S2, S3, S4 gebildet sind, wobei die Einzelschichten S1, S2, S3, S4 jeweils getrennt die entsprechenden Funktionen übernehmen, sich aber auch gegenseitig zumindest teilweise durchdringen können.

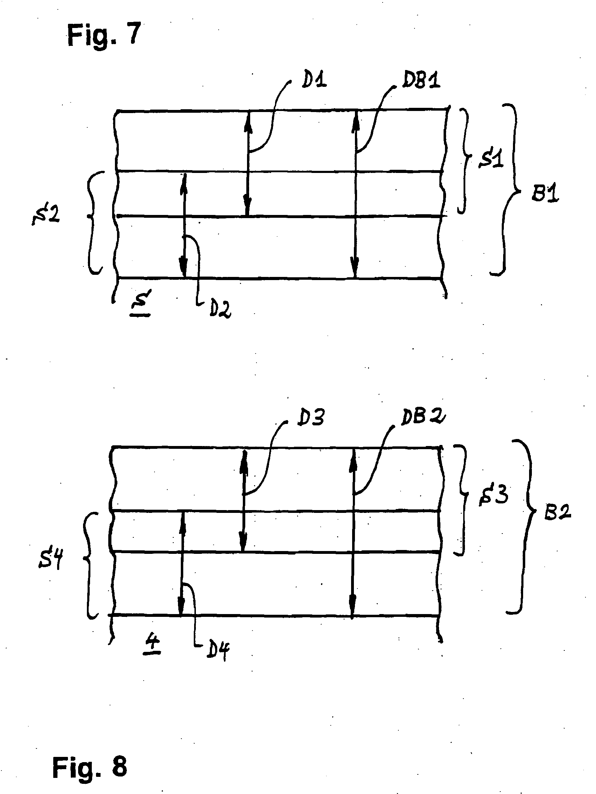

Beispiele für Beschichtungen B1, B2 der letztgenannten Art zeigen Fig. 7 und 8, wobei Fig. 7 repräsentativ für eine bevorzugte erste funktionelle Beschichtung B1 und Fig. 8 für eine bevorzugte zweite funktionelle Beschichtung B2 einer erfindungsgemäßen Befestigungsanordnung ist.

Wie Fig. 7 und 8 zeigen, ist sowohl die erste Beschichtung B1 des Kopfteiles 1, im dargestellten Fall des Schraubkörpers S, aus einem Schichtsystem mit zwei Einzelschichten S1, S2 als auch die zweite Beschichtung B2 der Scheibe 4 aus einem Schichtsystem mit zwei Einzelschichten S3, S4 gebildet, wobei den Einzelschichten S1, S2, S3, S4 jeweils spezifische Funktionen zugeordnet sind. Sowohl die beiden Einzelschichten S1, S2 der ersten Beschichtung B1, als auch die beiden Einzelschichten S3, S4 der zweiten Beschichtung B2 durchdringen sich dabei teilweise gegenseitig, was durch die entsprechende Herstellungstechnologie und Kompatibilität - bzw. bevorzugt durch eine Affinität - der Schichtkonstituenten erreicht werden kann. Dadurch kommt vorteilhafterweise ein festerer und kompakterer Schichtverbund mit erhöhter Resistenz gegen Umwelteinflüsse zustande.

Bevorzugt handelt es sich bei den jeweils unteren Einzelschichten S2, S4 um Basisschichten, die der Erzielung eines kathodischen Korrosionsschutzes dienen. Der kathodische Korrosionsschutz ist ein elektrochemisches Schutzverfahren, bei dem über den Elektrolyten, wie z. B. Wasser, ein elektrischer Gleichstrom auf die zu schützenden Metallstrukturen fließt. Durch diesen Schutzstrom erfolgt an der Metalloberfläche im Elektrolyten eine kathodische Polarisation. Dadurch wird verhindert, dass Metallionen aus der Metalloberfläche gelöst werden. Für die Erzeugung des Schutzstromes können beispielsweise galvanische Aktivanoden, sogenannte Opferanoden, Verwendung finden, die auf der Ausnutzung der Spannungsdifferenz zwischen einem unedleren Anodenmaterial und dem Schutzobjekt, z. B. Stahl, beruhen. Die jeweils unteren Einzelschichten S2, S4 können daher insbesondere aus einem solchen unedlen Anodenmaterial, wie aus Magnesium oder Zink, bestehen.

In besonders bevorzugter Weise können die jeweils unteren Einzelschichten S2, S4 aus einer Kombination von Zink- und Aluminiumlamellen bestehen, die in eine anorganische oder zumindest nahezu vollständig anorganische, insbesondere auf der Basis von Siliciumdioxid hergestellte, Matrix eingebettet sind. Die Auftragung kann dabei durch Kalttauchen in eine wässerige Lösung oder durch Spritzen mit nachfolgender Einbrennung erfolgen. Die Lösung kann dabei neben einem Alkalihydroxid auch einen organischen Stoff, wie ein Copolymer auf der Basis von Polypropylenglykol und Polyethylenglykol, ein Silikonpolymer, oder eine quaternäre Ammoniumverbindung, vorzugsweise in Anteilen von 0,01 bis 1 %, enthalten.

In einem Tauch-/Schleuderverfahren für Trommelware, das besonders für Kleinteile geeignet ist, werden diese nach einer Reinigung in das schichterzeugende Bad getaucht, wonach die überflüssige Lösung abgeschleudert wird. Die feuchten Teile werden zunächst im Ofen getrocknet und dann auf die Temperatur von vorzugsweise etwa 300 °C erhitzt, um den Überzug zu bilden. Das Verfahren erlaubt es dabei, die Oberfläche der Teile vollständig zu benetzen, so dass auch die Innenseiten von Rohren oder Hohlräume, im vorliegenden Fall die Ringöffnung 6 der Scheibe 4, beschichtet werden.

Für Schüttgut ist besonders das Spritzverfahren geeignet, bei dem nach der Reinigung die Kleinteile zum Aufbringen der Lösung in eine spezielle Spritzanlage eingeführt werden. Danach erfolgt die Wärmebehandlung ebenso wie beim Tauch-/Schleuderverfahren.

Beide Verfahren sind grundsätzlich zur Herstellung einer erfindungsgemäßen Befestigungsanordnung, wie eines erfindungsgemäßen Befestigungselementes geeignet, wobei das zweite die schonendere Verfahrensweise darstellt.

Bei einem derartigen Aufbau der Schichten S2, S4 ist der Korrosionswiderstand abhängig von der jeweiligen Schichtdicke D2, D4. So können beispielsweise bei einem spezifischen Gewicht der Einzelschichten S2, S4 von mehr als 24 g/m², d. h. bei einer mittleren Schichtdicke D2, D4 von etwa 5 bis 8 µm, im Salzsprühtest nach DIN 50 021 Werte von etwa 600 Stunden und bei einem spezifischen Gewicht von mehr als 36 g/m², d. h. bei einer mittleren Schichtdicke D2, D4 von etwa 8 bis 10 µm, Werte von etwa 1000 Stunden erreicht werden. Der Korrosionswiderstand im Salzsprühnebeltest wird dabei bei einer Wärmelagerung von 100 Stunden bei 180 °C nicht beeinträchtigt.

Der Korrosionswiderstand ergibt sich aus einer synergistischen Kombination mehrerer Faktoren, nämlich erstens eines Barriere-Effekts, der durch die Lamellenstruktur der Schichten S2, S4 bewirkt wird, zweitens eines kontrollierten kathodischen Schutzes infolge eines einstellbaren Verhältnisses des Zinks zum eisenhaltigen Grundkörper, im vorliegenden Fall also dem Kopf 1, dem Schaft 2 und der Scheibe 4, und drittens der Verlangsamung des natürlichen Zink- und Aluminiumverbrauchs durch die Passivierung der Schichten S2, S4 mittels der anorganischen Matrix.

Der genannte, besonders bevorzugte Schichtaufbau der Einzelschichten S2, S4 weist des Weiteren mehrere Vorteile auf, die ihn für den Einsatz von Radschrauben bei Automobilen prädestinieren. So entsteht durch die nicht-elektrolytische Auftragung der Beschichtung keine Wasserstoffversprödung. Die Beständigkeit gegen Automobilbetriebsmittel, wie Norm-Kraftstoffe, Diesel, Motorenöl, organische Lösemittel, Kühlflüssigkeit, Bremsflüssigkeiten usw., gemäß VDA 621-412 ist zufriedenstellend, was sich z. B. darin ausdrückt, dass nach einem 24-stündigen Eintauchen in Bremsflüssigkeit bei 20 °C der Überzug nicht beeinträchtigt wird. Die Schichten S2, S4, die von aluminiumgrauer Färbung sind, behalten ihre bei Raumtemperatur vorliegenden strukturellen Eigenschaften bis zu einer Temperatur von etwa 300 °C, also bis zur Bildungstemperatur des Überzugs, wobei sie eine für eine gemeinsame elastische Verformung mit Stählen ausreichende Duktilität besitzen. Darüber hinaus enthalten die Einzelschichten S2, S4 vorteilhafterweise keine Schwermetalle, wie Blei, Cadmium, Nickel, Chrom oder Quecksilber, und entsprechen damit höchsten Anforderungen in Bezug auf Gesundheits- und Umweltschutz sowie Sicherheit.

Bei den jeweils oberen Einzelschichten S1, S3 kann es sich bevorzugt um Deck- bzw. Siegelschichten handeln, die den Widerstand gegen Korrosion, beispielsweise gegen Kontaktkorrosion bei Paarung mit Magnesium, Aluminium, Gummi u. a., und den Schutz gegen mechanische Beschädigung weitergehend erhöhen. Die Auftragung kann dabei insbesondere mit Schichtdicken D1, D3 von weniger als 5 µm, vorzugsweise von nur bis zu 1 µm, in einem Tauch-/Schleuder- oder in einem Tauch-/Abtropfverfahren erfolgen. Die zu beschichtenden Teile, also das Kopfteil 1, insbesondere der Schraubkörper S, und die Scheibe 4, werden dazu in eine anorganische wässerige Lösung gebracht, die reaktiv zur Bildung eines Überzugs führt. Der nach einem Trocknen vorliegende Überzug kann insbesondere aus Natrium-, Kalium- und/oder Lithiumsilikat bestehen und ist in diesem Fall transparent, so dass er die z. B. aluminiumgraue Färbung einer darunter liegenden Zink-Aluminium-Lamellenschicht nicht beeinträchtigt.

Die jeweils oberen Einzelschichten S1, S3 können mit Vorteil im Sinne der Einstellung bestimmter tribotechnischer Charakteristika modifiziert sein, insbesondere für den Fall, dass ein Schmiereffekt, also eine Absenkung der Reibungszahl in einer der oben genannten Paarungen, wie "Oberfläche Kopfteil 1" mit "Oberfläche Scheibe 4", "Oberfläche Scheibe 4" mit "Oberfläche Bauteil" und/oder "Oberfläche Schaft 2", insbesondere "Oberfläche Gewinde 3" mit "Oberfläche "Bauteil", erwünscht ist.

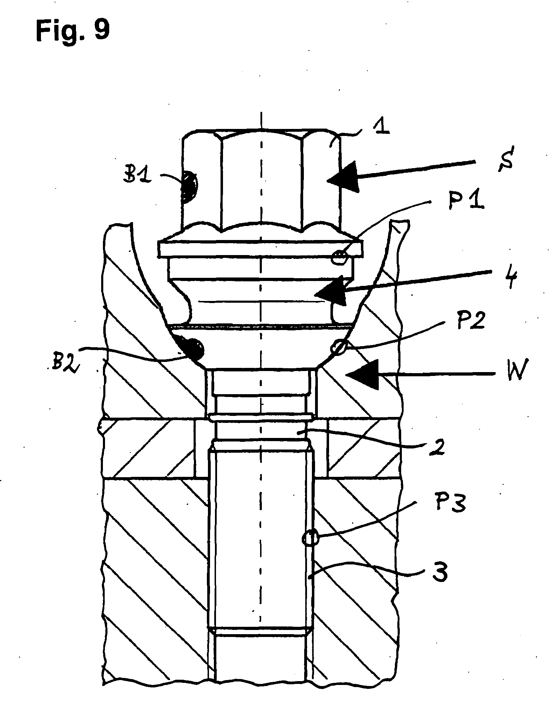

Die genannten Reibpaarungen sind in Fig. 9 exemplarisch dargestellt. Die Paarung "Oberfläche Kopfteil 1" mit "Oberfläche Scheibe 4" ist dabei mit dem Bezugszeichen P1, die Paarung "Oberfläche Scheibe 4" mit "Oberfläche Bauteil" mit dem Bezugszeichen P2 und die Paarung Oberfläche Gewinde 3", mit "Oberfläche "Bauteil" mit dem Bezugszeichen P3 bezeichnet. Das Bauteil selbst, bei dem es sich bevorzugt um eine Radnabe handeln und das auch mehrteilig ausgebildet sein kann, ist mit dem Bezugszeichen W bezeichnet.

Es kann entweder sowohl auf dem Schraubkörper S, als auch auf der Scheibe 4 ein Schmiereffekt eingestellt werden, oder es wird nur ein Teil geschmiert, vorzugsweise der Schraubkörper S, um zu erreichen, dass die Scheibe 4 beim Anziehen des erfindungsgemäßen Befestigungselementes gegenüber einem Rad keine oder nur eine sehr geringe Relativbewegung ausführt, sich also der Schraubkörper S auf der Scheibe 4 dreht und nicht die Scheibe 4 auf dem Bauteil. Die Reibungszahl in der Paarung P1 "Oberfläche Kopfteil 1" mit "Oberfläche Scheibe 4" ist dabei kleiner als die Haftreibungszahl in der Paarung P2 "Oberfläche Scheibe 4" mit "Oberfläche Bauteil".

Die Modifikation kann dabei dadurch erfolgen, dass in die Schichten S1, S3 Trockenschmierstoffe, beispielsweise Polytetrafluorethylen, Polyethylen, Polyethylenglykol, Paraffin, molybdänhaltige Substanzen, wie Molybdänsulfid oder -oxid, sowie Graphit, in feindispergierter, vorzugsweise kolloidal verteilter, Form eingebracht werden. Durch die Art des Schmierstoffs und die Höhe des Schmierstoffanteils können dabei die Reibungszahlen in den genannten Paarungen in weiten Grenzen eingestellt werden.

Ein bevorzugter Schmierstoffgehalt liegt dabei im Bereich von bis zu etwa 15 %, besonders bevorzugt von etwa 5 bis 15 %.

Die aus den oberen Einzelschichten S1, S3 und den unteren Einzelschichten S2, S4 gebildeten Beschichtungen B1, B2 können mit Vorteil Gesamtdicken DB1, DB2 von etwa 5 bis 15 µm aufweisen, wobei sich die Einzelschichten S1/S2, S3/S4 bis zum halben Wert ihrer jeweiligen Dicke D1, D2, D3, D4 durchdringen können.

### Spezielles Ausführungsbeispiel

Bei einem erfindungsgemäßen kombinierten Befestigungselement wurden auf der Oberfläche sowohl des Schraubkörpers S als auch der Scheibe 4 zunächst zum kathodischen Korrosionsschutz auf die oben beschriebene Weise in einem Tauch-/Schleuderverfahren Teilschichten S2, S4 gebildet, die aus einer Kombination von Zink- und Aluminiumlamellen bestanden, welche in eine anorganische Matrix eingebettet waren. Die Teilschichten S2, S4 enthielten etwa 71,5 % metallisches Zink, etwa 7,3 % metallisches Aluminium und etwa 18,8 % SiO₂.

Auf die Oberfläche der Teilschicht S2 des Schraubkörpers S wurde zusätzlich zur weiteren Erhöhung des Korrosionsschutzes und zur Einstellung einer gewünschten Reibungszahl in der Art, wie oben ausgeführt, eine weitere - silikatische - Teilschicht S1 aufgebracht, die als Schmierstoffzusatz Polytetrafluorethylen enthielt. Die dadurch gebildete Beschichtung B1 hatte eine Gesamtdicke von etwa 10 µm und enthielt etwa 50,2 % metallisches Zink, etwa 7,0 % metallisches Aluminium, etwa 15,0 % SiO₂, etwa 0,6 % PTFE und etwa 11,0 % Natriumsilikat. Die Salzsprühnebelbeständigkeit gemäß DIN 50021 lag bei mehr als 720 Stunden ohne Bildung von Rotrost. Eine nach DIN 946 bestimmte Reibungszahl lag im Bereich von 0,09 bis 0,14.

Auf die Oberfläche der Teilschicht S4 der Scheibe 4 wurde zusätzlich zur weiteren Erhöhung des Korrosionsschutzes in der Art, wie oben ausgeführt, eine weitere - silikatische - Teilschicht S3 aufgebracht, die schmierstofffrei war, ansonsten jedoch die gleiche Zusammensetzung aufwies, wie die auf die Teilschicht S2 aufgebrachte zusätzliche Schicht S1. Die dadurch gebildete Beschichtung B2 hatte eine Gesamtdicke von etwa 10 µm. Die Salzsprühnebelbeständigkeit gemäß DIN 50021 lag bei mehr als 720 Stunden ohne Bildung von Rotrost. Eine nach DIN 946 bestimmte Reibungszahl lag im Bereich von mehr als 0,15.

Mit dem derartigen erfindungsgemäßen kombinierten Befestigungselement konnte, insbesondere bei KTL-beschichteten Stahlrädern, sichergestellt werden, dass sich beim Anziehen die Scheibe 4 nicht gegen die Radkalotte W drehte.

Die Erfindung ist nicht auf das beschriebene Ausführungsbeispiel beschränkt, sondern umfasst auch alle im Sinne der Erfindung gleichwirkenden Ausführungen. So kann die konstruktive Ausführung des erfindungsgemäßen kombinierten Befestigungselementes von der dargestellten beispielsweise derart abweichen, dass sie sämtliche Merkmale aufweist, wie sie im eingangs genannten Gebrauchsmuster DE 298 19 782 U1 beschrieben sind. Die Zusammensetzungen der Beschichtungen B1, B2 können in weitem Rahmen variieren, wobei die Beschichtungen B1, B2 nicht zwangsläufig aus den beschriebenen Teilschichten S1, S2, S3, S4 gebildet sein müssen.

Es fällt auch in den Rahmen der Erfindung, wenn dass das Kopfteil 1 aus einer Mutter und das Schaftteil 2 aus einem separaten Schaft gebildet sind, wobei der Schaft mit einem Ende, das dem den Gewindeabschnitt 3 tragenden freien Ende gegenüberliegt, mit dem Bauteil W form-, kraft- und/oder stoffschlüssig verbindbar ist.

Es können außerdem auch weitere zweckmäßige technische Maßnahmen vorgesehen sein, wie beispielsweise die Einstellung bestimmter Rauheitswerte der Beschichtungen B1, B2, wodurch bedarfsweise auch eine Erhöhung der Reibungszahl herbeigeführt werden kann und/oder ein bestehender Reibzahlunterschied der Beschichtungen B1, B2 noch vergrößert werden kann.

Auch einer aus der erfindungsgemäßen kombinierten Befestigungsanordnung und aus einem Bauteil W gebildeten Montageanordnung, wie sie exemplarisch in Fig. 9 dargestellt ist, und einer Verwendung der erfindungsgemäßen kombinierten Befestigungsanordnung in einer derartigen Montageanordnung wird erfinderische Bedeutung beigemessen.

### Bezugszeichen

- 1: Kopf
- 2: Schaft
- 3: Gewindeabschnitt von 2
- 4: Scheibe
- 5: Rand an 2
- 6: Ringöffnung von 4

- B1: erste funktionelle Beschichtung (auf S)
- B2: zweite funktionelle Beschichtung (auf 4)
- D_{G}: Außendurchmesser von 3
- D_{R}: Außendurchmesser von 5
- D_{S}: Durchmesser von 2
- D_{O}: Innendurchmesser von 6
- D1: Dicke von S1
- D2: Dicke von S2
- D3: Dicke von S3
- D4: Dicke von S4
- DB1: Dicke von B1
- DB2: Dicke von B2
- P1: Reibpaarung 1/4.
- P2: Reibpaarung 4/W
- P3: Reibpaarung 3/W
- S: Schraubkörper aus 1 und 2
- S1: obere Teilschicht von B1
- S2: untere Teilschicht von B1
- S3: obere Teilschicht von B2
- S4: untere Teilschicht von B2
- W: Bauteil

## Patentansprüche

1. Kombinierte Befestigungsanordnung mit einem Kopfteil (1) zur Drehmomentaufbringung und mit einem Schaftteil (2), das am freien Ende einen Gewindeabschnitt (3) aufweist, wobei an dem Kopfteil (1) und auf dem Schaftteil (2) eine Scheibe (4) verdrehbar gehalten ist und wobei das Kopfteil (1) mit einer ersten funktionellen Beschichtung (B1) und die Scheibe (4) mit einer von der ersten funktionellen Beschichtung (B1) unterschiedenen zweiten funktionellen Beschichtung (B2) beschichtet ist,
**dadurch gekennzeichnet, dass** die funktionellen Beschichtungen (B1, B2) derartig tribotechnisch wirksame Schichten (S1, S3) umfassen, dass bei einem unter Aufbringung eines Drehmoments erfolgenden Anziehen des Kopfteils (1) die Scheibe (4) gegenüber einem Bauteil (W), mit dem eine Verbindung erfolgen soll, keine Relativbewegung ausführt, d. h., dass sich beim Anziehen immer das Kopfteil (1) auf der Scheibe (4) dreht, nicht aber die Scheibe (4) auf dem Bauteil (W).

2. Befestigungsanordnung nach Anspruch 1,
**dadurch gekennzeichnet, dass** die erste Beschichtung (B1) und/oder die zweite Beschichtung (B2) zumindest eine korrosionsmindernde Schutzschicht (S2, S4) umfasst.

3. Befestigungsanordnung nach Anspruch 2,
**dadurch gekennzeichnet, dass** die korrosionsmindemde Schutzschicht (S2, S4) identisch mit der tribotechnisch wirksamen Schicht (S1, S3) ist.

4. Befestigungsanordnung nach einem der Ansprüche 1 bis 3,
**dadurch gekennzeichnet, dass** die erste Beschichtung (B1) und/oder die zweite Beschichtung (B2) jeweils aus einem Schichtsystem mit zwei oder mehr Einzelschichten (S1, S2, S3, S4) gebildet ist.

5. Befestigungsanordnung nach einem der Ansprüche 2 bis 4,
**dadurch gekennzeichnet, dass** die korrosionsmindernde Schutzschicht (S2, S4) aus einer Kombination von Zink- und Aluminiumlamellen besteht, die in eine anorganische Matrix eingebettet sind.

6. Befestigungsanordnung nach einem der Ansprüche 2 bis 5,
**dadurch gekennzeichnet, dass** die korrosionsmindemde Schutzschicht (S2, S4) eine Dicke (D2, D4) von 5 bis 10 µm aufweist.

7. Befestigungsanordnung nach einem der Ansprüche 1 bis 6,
**dadurch gekennzeichnet, dass** die erste Beschichtung (B1) und/oder die zweite Beschichtung (B2) als tribotechnisch wirksame Schicht (S1, S2) eine reibungsmindemde Gleitschicht umfasst.

8. Befestigungsanordnung nach einem der Ansprüche 1 bis 7,
**dadurch gekennzeichnet, dass** die erste Beschichtung (B1) und/oder die zweite Beschichtung (B2) eine tribotechnisch wirksame Schicht (S1, S3) umfasst, die auf der Basis von Natrium-, Kalium- und/oder Lithiumsilikat hergestellt ist.

9. Befestigungsanordnung nach einem der Ansprüche 1 bis 8,
**dadurch gekennzeichnet, dass** die erste Beschichtung (B1) und/oder die zweite Beschichtung (B2) eine tribotechnisch wirksame Schicht (S1, S3) umfasst, die als reibungsmindernde Gleitschicht Trockenschmierstoffe, wie Polytetrafluorethylen, Polyethylen, Polyethylenglykol, Paraffin, Graphit oder molybdänhaltige Substanzen, wie Molybdänsulfid oder-oxid, enthält.

10. Befestigungsanordnung nach einem der Ansprüche 1 bis 9,
**dadurch gekennzeichnet, dass** die erste Beschichtung (B1) und/oder die zweite Beschichtung (B2) eine tribotechnisch wirksame Schicht (S1, S3) umfasst, die eine Dicke (D1, D3) von 5 bis 10 µm aufweist.

11. Befestigungsanordnung nach einem der Ansprüche 1 bis 10,
**dadurch gekennzeichnet, dass** in einem Schichtsystem der ersten Beschichtung (B1) und/oder der zweiten Beschichtung (B2) mit zwei oder mehr Einzelschichten (S1, S2, S3, S4) eine korrosionsmindernde, insbesondere zinkhaltige, Schutzschicht (S2, S4) eine jeweils untere Schicht und eine tribotechnisch wirksame Schicht (S1, S3) eine jeweils obere Schicht bilden.

12. Befestigungsanordnung nach einem der Ansprüche 1 bis 10,
**dadurch gekennzeichnet, dass** in einem Schichtsystem der ersten Beschichtung (B1) und/oder der zweiten Beschichtung (B2) mit zwei oder mehr Einzelschichten (S1, S2, S3, S4) sich die Einzelschichten gegenseitig durchdringen.

13. Befestigungsanordnung nach einem der Ansprüche 1 bis 11,
**dadurch gekennzeichnet, dass** die Schichtdicken (DB1, DB2) der ersten Beschichtung (B1) und/oder der zweiten Beschichtung (B2) im Bereich von 5 bis 15 µm liegen.

14. Befestigungsanordnung nach einem der Ansprüche 1 bis 13,
**dadurch gekennzeichnet, dass** die erste Beschichtung (B1) eine nach DIN 946 bestimmte Reibungszahl im Bereich von 0,09 bis 0,14 und die zweite Beschichtung (B2) eine jeweils größere Reibungszahl als die erste Beschichtung (B1) aufweist.

15. Befestigungsanordnung nach einem der Ansprüche 1 bis 14,
**dadurch gekennzeichnet, dass** die erste Beschichtung (B1) einen Trockenschmierstoff enthält, während die zweite Beschichtung (B2) schmierstofffrei ist.

16. Befestigungsanordnung nach einem der Ansprüche 1 bis 15,
**dadurch gekennzeichnet, dass** die Oberflächen der ersten Beschichtung (B1) und der zweiten Beschichtung (B2) jeweils unterschiedliche Rauheitswerte aufweisen.

17. Befestigungsanordnung nach einem der Ansprüche 1 bis 16,
**dadurch gekennzeichnet, dass** das Kopfteil (1) aus einem Kopf (1) zur Drehmomentaufbringung und das Schaftteil (2) aus einem Schaft (2) gebildet sind, die zusammen einen Schraubkörper (S) bilden, der an seinem freien Ende den Gewindeabschnitt (3) aufweist, wobei zwischen dem Kopf (1) und dem Gewindeabschnitt (3) an dem Schaft (2) die Scheibe (4) verdrehbar gehalten ist und wobei der Kopf (1) und die Scheibe (4) jeweils mit der ersten und zweiten funktionellen Beschichtung (B1, B2) überzogen sind.

18. Befestigungsanordnung nach einem der Ansprüche 1 bis 17,
**dadurch gekennzeichnet, dass** das Kopfteil (1), insbesondere der Kopf (1), das Schaftteil (2), insbesondere der Schaft (2), sowie die Scheibe (4), welche vorzugsweise unverlierbar am Schaftteil (2) gehalten ist, ein kombiniertes Befestigungselement bilden.

19. Befestigungsanordnung nach einem der Ansprüche 1 bis 18,
**dadurch gekennzeichnet, dass** das Schaftteil (2), insbesondere der Schaft (2), mit einer funktionellen Beschichtung (B1) wie das Kopfteil (1), insbesondere der Kopf (1), überzogen ist.

20. Befestigungsanordnung nach einem der Ansprüche 1 bis 16,
**dadurch gekennzeichnet, dass** das Kopfteil (1) aus einer Mutter und das Schaftteil (2) aus einem separaten Schaft gebildet sind, wobei der Schaft mit einem Ende, das dem den Gewindeabschnitt (3) tragenden freien Ende gegenüberliegt, mit dem Bauteil form-, kraft- und/oder stoffschlüssig verbindbar ist.

21. Befestigungsanordnung nach einem der Ansprüche 1 bis 20,
**dadurch gekennzeichnet, dass** die Scheibe (4) sich in einem Anlagebereich für das Bauteil (W), mit dem eine Verbindung erfolgen soll, kugel- oder kegelförmig verjüngt.

22. Montageanordnung, bestehend aus der Befestigungsanordnung nach einem der Ansprüche 1 bis 20 und aus einem Bauteil (W), welches mit der Befestigungsanordnung verbunden ist.

23. Montageanordnung nach Anspruch 22,
**dadurch gekennzeichnet, dass** das Bauteil (W) ein Fahrzeugrad ist, dessen Felge aus Stahl oder Aluminium besteht und mit einer kathodischen Tauchlegierung (KTL) beschichtet ist.

24. Montageanordnung nach Anspruch 22 oder 23,
**dadurch gekennzeichnet, dass** eine Reibungszahl einer Paarung (P1) der Oberfläche des Kopfteils (1) mit der Oberfläche der Scheibe (4) kleiner ist als eine Haftreibungszahl einer Paarung (P2) der Oberfläche der Scheibe (4) mit der Oberfläche des Bauteils (W).

25. Verwendung einer Befestigungsanordnung nach einem der Ansprüche 1 bis 21 zur Herstellung einer Montageanordnung nach einem der Ansprüche 22 bis 24.

## Claims

1. A combined fastening arrangement comprising a head part (1) for the application of torque and a shaft part (2) which has a threaded portion (3) at the free end, a disc (4) being rotatably held at the head part (1) and on the shaft part (2), and the head part (1) being coated with a first functional coating (B1) and the disc (4) with a second functional coating (B2) which is different from the first functional coating (B1),
**characterised in that** the functional coatings (B1, B2) comprise tribotechnically effective layers (S1, S3) of such a kind that, during tightening of the head part (1), which occurs during the application of a torque, the disc (4) does not perform a relative movement with respect to a component (W) to which a connection is to be made, that is to say that, during tightening, the head part (1) always rotates on the disc (4), but the disc (4) does not rotate on the component (W).

2. A fastening arrangement according to Claim 1,
**characterised in that** the first coating (B1) and/or the second coating (B2) comprises at least one corrosion-reducing protective layer (S2, S4).

3. A fastening arrangement according to Claim 2,
**characterised in that** the corrosion-reducing protective layer (S2, S4) is identical to the tribotechnically effective layer (S1, S3).

4. A fastening arrangement according to one of Claims 1 to 3,
**characterised in that** the first coating (B1) and/or the second coating (B2) are in each case formed from a layer system comprising two or more individual layers (S1, S2, S3, S4).

5. A fastening arrangement according to one of Claims 2 to 4,
**characterised in that** the corrosion-reducing protective layer (S2, S4) consists of a combination of zinc and aluminium lamellae which are embedded in an inorganic matrix.

6. A fastening arrangement according to one of Claims 2 to 5,
**characterised in that** the corrosion-reducing protective layer (S2, S4) has a thickness (D2, D4) of 5 to 10 µm.

7. A fastening arrangement according to one of Claims 1 to 6,
**characterised in that** the first coating (B1) and/or the second coating (B2) as a tribotechnically effective layer (S1, S2) comprises a friction-reducing sliding layer.

8. A fastening arrangement according to one of Claims 1 to 7,
**characterised in that** the first coating (B1) and/or the second coating (B2) comprises a tribotechnically effective layer (S1, S3) which is made based on sodium-, potassium- and/or lithium silicate.

9. A fastening arrangement according to one of Claims 1 to 8,
**characterised in that** the first coating (B1) and/or the second coating (B2) comprises a tribotechnically effective layer (S1, S3) which contains as a friction-reducing sliding layer dry lubricants such as polytetrafluoroethylene, polyethylene, polyethylene glycol, paraffin, graphite or molybdenum-containing substances such as molybdenum sulphide or -oxide.

10. A fastening arrangement according to one of Claims 1 to 9,
**characterised in that** the first coating (B1) and/or the second coating (B2) comprises a tribotechnically effective layer (S1, S3) which has a thickness (D1, D3) of 5 to 10 µm.

11. A fastening arrangement according to one of Claims 1 to 10,
**characterised in that,** in a layer system of the first coating (B1) and/or of the second coating (B2) comprising two or more individual layers (S1, S2, S3, S4), a corrosion-reducing, in particular zinc-containing, protective layer (S2, S4) forms a respective lower layer and a tribotechnically effective layer (S1, S3) forms a respective upper layer.

12. A fastening arrangement according to one of Claims 1 to 10,
**characterised in that,** in a layer system of the first coating (B1) and/or of the second coating (B2) comprising two or more individual layers (S1, S2, S3, S4), the individual layers interpenetrate one another.

13. A fastening arrangement according to one of Claims 1 to 11,
**characterised in that** the layer thicknesses (DB1, DB2) of the first coating (B1) and/or of the second coating (B2) lie within the range of 5 to 15 µm.

14. A fastening arrangement according to one of Claims 1 to 13,
**characterised in that** the first coating (B1) has a coefficient of friction defined according to DIN 946 within the range of 0.09 to 0.14 and the second coating (B2) has a respectively larger coefficient of friction than the first coating (B1).

15. A fastening arrangement according to one of Claims 1 to 14,
**characterised in that** the first coating (B1) contains a dry lubricant, while the second coating (B2) is lubricant-free.

16. A fastening arrangement according to one of Claims 1 to 15,
**characterised in that** the surfaces of the first coating (B1) and of the second coating (B2) each have different roughness values.

17. A fastening arrangement according to one of Claims 1 to 16,
**characterised in that** the head part (1) is formed from a head (1) for the application of torque and the shaft part (2) is formed from a shaft (2), which together form a screw body (S) that has the threaded portion (3) at its free end, the disc (4) being rotatably held between the head (1) and the threaded portion (3) on the shaft (2), and the head (1) and the disc (4) being coated respectively with the first and second functional coating (B1, B2).

18. A fastening arrangement according to one of Claims 1 to 17,
**characterised in that** the head part (1), in particular the head (1), the shaft part (2), in particular the shaft (2), and the disc (4) which is preferably held on the shaft part (2) so that it cannot be lost, form a combined fastening element.

19. A fastening arrangement according to one of Claims 1 to 18,
**characterised in that** the shaft part (2), in particular the shaft (2), is coated with a functional coating (B1) like the head part (1), in particular the head (1).

20. A fastening arrangement according to one of Claims 1 to 16,
**characterised in that** the head part (1) is formed from a nut and the shaft part (2) is formed from a separate shaft, one end of the shaft which is opposite to the free end bearing the threaded portion (3) being connectible to the component in a positive-, frictional- and/or material-locking manner.

21. A fastening arrangement according to one of Claims 1 to 20,
**characterised in that** the disc (4) tapers in a spherical or conical shape in an abutment region for the component (W) to which a connection is to be made.

22. An assembly arrangement, consisting of the fastening arrangement according to one of Claims 1 to 20 and a component (W) which is connected to the fastening arrangement.

23. An assembly arrangement according to Claim 22,
**characterised in that** the component (W) is a vehicle wheel, the rim of which consists of steel or aluminium and is coated with a cathodic dipping alloy.

24. An assembly arrangement according to Claim 22 or 23,
**characterised in that** a coefficient of friction of a mating (P1) of the surface of the head part (1) with the surface of the disc (4) is lower than a static coefficient of friction of a mating (P2) of the surface of the disc (4) with the surface of the component (W).

25. A use of a fastening arrangement according to one of Claims 1 to 21 in order to produce an assembly arrangement according to one of Claims 22 to 24.

## Revendications

1. Arrangement de fixation combiné comprenant une partie tête (1) pour appliquer un couple de rotation, et une partie tige (2) qui présente à son extrémité libre, une section filetée (3), dans lequel au niveau de la partie tête (1) et sur la partie tige (2) est maintenu une rondelle (4) pouvant être décalée et dans lequel la partie tête (1) est revêtue d'un premier revêtement fonctionnel (B1) et la rondelle (4) est revêtue par un deuxième revêtement fonctionnel (B2) différent du premier revêtement fonctionnel (B 1),
**caractérisé en ce que** les revêtements fonctionnels (B1, B2) comprennent des couches efficaces d'un point de vue tribotechnique (S1, S3) telles que lors d'un serrage s'effectuant en appliquant un couple de rotation de la partie tête (1), la rondelle (4) opposée à un élément (W) avec lequel une liaison doit se produire, n'entraîne pas de mouvement relatif c'est-à-dire que lors du serrage, la partie tête (1) tourne toujours sur la rondelle (4) mais non la rondelle (4) sur l'élément (W).

2. Arrangement de fixation selon la revendication 1,
**caractérisé en ce que** le premier revêtement (B1) et/ou le deuxième revêtement (B2) comprennent au moins une couche protectrice (S2, S4) réduisant la corrosion.

3. Arrangement de fixation selon la revendication 2,
**caractérisé en ce que** la couche protectrice (S2, S4) réduisant la corrosion est une couche (S1, S3) efficace d'un point de vue tribotechnique.

4. Arrangement de fixation selon l'une quelconque des revendications 1 à 3,
**caractérisé en ce que** le premier revêtement (B1) et/ou le deuxième revêtement (B2) sont constitués respectivement d'un système de couches comportant deux couches individuelles ou plus (S1, S2, S3, S4).

5. Arrangement de fixation selon l'une quelconque des revendications 2 à 4,
**caractérisé en ce que** la couche réduisant la corrosion (S2, S4) est constituée d'une combinaison de lamelles de zinc et d'aluminium qui sont englobées dans une matrice anorganique.

6. Arrangement de fixation selon l'une quelconque des revendications 2 à 5,
**caractérisé en ce que** la couche réduisant la corrosion (S2, S4) présente une épaisseur (D2, D4) de 5 à 10 µm.

7. Arrangement de fixation selon l'une quelconque des revendications 1 à 6,
**caractérisé en ce que** le premier revêtement (B1) et/ou le deuxième revêtement (B2) comprend comme couche (S1, S2) efficace d'un point de vue tribotechnique, une couche de glissement réduisant le frottement.

8. Arrangement de fixation selon l'une quelconque des revendications 1 à 7,
**caractérisé en ce que** le premier revêtement (B1) et/ou le deuxième revêtement (B2) comprennent une couche (S1, S3) efficace d'un point de vue tribotechnique qui est produite à base de silicate de sodium, de potassium et/ou de lithium.

9. Arrangement de fixation selon l'une quelconque des revendications 1 à 8,
**caractérisé en ce que** le premier revêtement (B1) et/ou le deuxième revêtement (B2) comprennent une couche (S1, S3) efficace d'un point de vue tribotechnique qui contient comme couche de glissement réduisant le frottement, des lubrifiants secs tels que le polytétrafluoroéthylène, le polyéthylène, le polyéthylène glycol, la paraffine, le graphite ou des substances contenant du molybdène telles que le sulfure ou l'oxyde de molybdène.

10. Arrangement de fixation selon l'une quelconque des revendications 1 à 9,
**caractérisé en ce que** le premier revêtement (B1) et/ou le deuxième revêtement (B2) présentent une couche (S1, S3) efficace d'un point de vue tribotechnique qui présente une épaisseur (D1, D3) de 5 à 10 µm.

11. Arrangement de fixation selon l'une quelconque des revendications 1 à 10,
**caractérisé en ce que** dans un système de couches du premier revêtement (B1) et/ou du deuxième revêtement (B2) comportant deux couches individuelles ou plus (S1, S2, S3, S4), une couche protectrice (S2, S4) réduisant la corrosion, en particulier contenant du zinc, forme une couche inférieure respective et une couche (S1, S3) efficace d'un point de vue tribotechnique forme une couche supérieure respective.

12. Arrangement de fixation selon l'une quelconque des revendications 1 à 10,
**caractérisé en ce que,** dans un système de couches du premier revêtement (B1) et/ou du deuxième revêtement (B2) comportant deux couches individuelles (S1, S2, S3, S4) ou plus, les couches individuelles s'interpénètrent.

13. Arrangement de fixation selon l'une quelconque des revendications 1 à 11,
**caractérisé en ce que** les épaisseurs de couche (DB1, DB2) du premier revêtement (B1) et/ou du deuxième revêtement (B2) sont de l'ordre de 5 à 15 µm.

14. Arrangement de fixation selon l'une quelconque des revendications 1 à 13,
**caractérisé en ce que** le premier revêtement (B1) présente un coefficient de frottement déterminé selon la norme DIN 946 de l'ordre de 0,09 à 0,14 et le deuxième revêtement (B2) présente un coefficient de frottement respectivement plus grand que celui du premier revêtement (B1).

15. Arrangement de fixation selon l'une quelconque des revendications 1 à 14,
**caractérisé en ce que** le premier revêtement (B1) contient un lubrifiant sec alors que le deuxième revêtement (B2) ne contient pas de lubrifiant.

16. Arrangement de fixation selon l'une quelconque des revendications 1 à 15,
**caractérisé en ce que** les surfaces du premier revêtement (B1) et/ou du deuxième revêtement (B2) présentent respectivement des valeurs de rugosité différentes.

17. Arrangement de fixation selon l'une quelconque des revendications 1 à 16,
**caractérisé en ce que** la partie tête (1) est formée d'une tête (1) pour l'application d'un couple de rotation et que la partie tige (2) est formée d'une tige (2) qui forme conjointement un corps de vis (S) qui présente à son extrémité libre la section filetée (3), dans lequel entre la tête (1) et la section filetée (3), la rondelle (4) est maintenue au niveau de la tige (2) de façon à pouvoir être décalée et dans lequel la tête (1) et la rondelle (4) sont revêtues respectivement des premier et deuxième revêtements (B1, B2) fonctionnels.

18. Arrangement de fixation selon l'une quelconque des revendications 1 à 17,
**caractérisé en ce que** la partie tête (1), en particulier la tête (1), la partie tige (2), en particulier la tige (2) et la rondelle (4) qui est maintenue au niveau de la partie tige (2) de préférence de façon à ne pas pouvoir être désolidarisée, forment un élément de fixation combiné.

19. Arrangement de fixation selon l'une quelconque des revendications 1 à 18,
**caractérisé en ce que** la partie tige (2), en particulier la tige (2) est revêtue d'un revêtement fonctionnel (B1) comme la partie tête (1), en particulier, la tête (1).

20. Arrangement de fixation selon l'une quelconque des revendications 1 à 16,
**caractérisé en ce que** la partie tête (1) est formée d'un écrou et la partie tige (2) est formée d'une tige séparée, la tige avec son extrémité qui est opposée à l'extrémité libre portant la section filetée (3), pouvant être reliée à l'élément par une liaison mécanique, par une force et/ou une substance.

21. Arrangement de fixation selon l'une quelconque des revendications 1 à 20,
**caractérisé en ce que** la rondelle (4) s'affine de façon sphérique ou conique dans une zone d'appui de l'élément (W) avec lequel une liaison doit s'effectuer.

22. Dispositif de montage constitué de l'arrangement de fixation selon l'une quelconque des revendications 1 à 20 et d'un élément (W) qui est relié à l'arrangement de fixation.

23. Dispositif de montage selon la revendication 22,
**caractérisé en ce que** l'élément (W) est une roue de véhicule dont la jante est en acier ou en aluminium et qui est revêtue d'un alliage par immersion cathodique (KTL).

24. Dispositif de montage selon la revendication 22 ou 23,
**caractérisé en ce qu'**un coefficient de frottement d'un accouplement (P1) de la surface de la partie tête (1) avec la surface de la rondelle (4) est inférieur à un coefficient de frottement d'un accouplement (P2) de la surface de la rondelle (4) avec la surface de l'élément (W).

25. Utilisation d'un arrangement de fixation selon l'une quelconque des revendications 1 à 21,
pour la production d'un dispositif de montage selon l'une quelconque des revendications 22 à 24.
